# FASCICULE DE BREVET EUROPEEN

(11) **EP 1 682 557 B1**
(45) Date de publication et mention de la délivrance du brevet: **16.04.2008**
(21) Numéro de dépôt: 04805316.9
(22) Date de dépôt: 27.10.2004
(51) Int. Cl.: C07F 7/16

(54) **PROCEDE DE SYNTHESE DIRECTE D ALKYLHALOGENOSILANES**
DIREKTES VERFAHREN ZUR SYNTHESE VON ALKYLHALOGENSILANEN
DIRECT METHOD FOR SYNTHESISING ALKYL HALOGENOSILANES

(30) Priorité: 05.11.2003 FR 0312969; 16.06.2004 FR 0406503
(43) Date de publication de la demande: 26.07.2006
(73) Titulaire: Bluestar Silicones France, 69486 Lyon Cedex 03 (FR)
(72) Inventeur: COLIN, Pascale, F-69680 Chassieu (FR)
(86) Numéro de dépôt international: PCT/FR2004/002759
(87) Numéro de publication internationale: WO 2005/044827

(56) Documents cités:
- EP-A- 0 778 279
- EP-A- 1 156 051
- EP-A- 1 173 447
- DE-A- 3 425 424
- FR-A- 2 848 211
- US-B1- 6 258 970

## Description

La présente invention se rapporte à des améliorations concernant le procédé industriel mis en oeuvre pour la synthèse directe d'alkylhalogénosilanes.

Le procédé industriel de fabrication d'alkylhalogénosilanes et, par exemple, de diméthyldichlorosilane dénommé par la suite DMDCS est un procédé bien connu qui est décrit notamment dans le brevet des Etats-Unis d'Amérique US-A-2 380 995, ainsi que dans l'ouvrage de Walter NOLL, Chemistry and Technology of Silicones, 1968 , édition Académie Press Inc., LONDON, pages 26-41.

Selon ce procédé dit de "synthèse directe" ou "synthèse de Rochow", on fabrique directement les alkylhalogénosilanes, par exemple le DMDCS, par réaction du chlorure de méthyle sur une masse solide, dite masse de contact, formée de silicium et d'un catalyseur comprenant du cuivre, suivant la réaction :

2CH₃Cl + Si -> (CH₃)₂SiCl₂.

En réalité il se forme au cours de la synthèse directe d'autres co-produits tels que ceux mentionnés ci-après : d'autres alkylhalogénosilanes comme le méthyltrichlorosilane CH₃SiCl₃ dénommé par la suite MTCS et le triméthylchlorosilane (CH₃)₃SiCl dénommé par la suite TMCS ; des alkylhydrogénosilanes halogénés comme par exemple le méthylhydrogénodichlorosilane (CH₃)HSiCl₂ dénommé par la suite MHDCS ; et des produits lourds qui sont des polysilanes, et en particulier des disilanes comme par exemple le triméthyltrichlorodisilane (CH₃)₃Si₂Cl₃ et le diméthyltétrachlorodisilane (CH₃)₂Si₂Cl₄.

A propos de la composition de la masse de contact, il est connu d'utiliser le cuivre, pris sous forme de cuivre métallique ou sous forme de composés chimiques à base de cuivre, comme catalyseur de la réaction de synthèse directe. Il est également connu, dans le but d'amener les performances de la synthèse directe à un niveau économiquement viable, de rajouter dans la masse de contact un ou plusieurs additif(s) promoteur(s). Ces additifs promoteurs peuvent être : le zinc ou un halogénure de zinc (brevet US-A-2 464 033) ; l'aluminium (brevets US-A-2 403 370 et 2 427 605) ; l'étain, le manganèse, le nickel et l'argent (brevet britannique GB-A-1 207 466) ; le cobalt (brevet britannique GB-A-907 161) ; le chlorure de potassium (brevet soviétique SU-A-307 650) ; l'arsenic ou un composé de l'arsenic (brevet US-A-4 762 940) ; le césium ou un composé du césium (EP-A-1 138 678) ; un additif choisi parmi l'élément phosphore, un phosphure métallique et un composé apte à fournir un phosphure métallique dans la masse réactionnelle de la synthèse directe (brevet US-A-4 601 101) ; des mélanges particuliers de certaines des espèces précitées (FR-A-2 848 124 et FR-A-2 848 211).

Il a maintenant été trouvé, et c'est ce qui constitue l'objet de la présente invention, que :
- dans le cas de la mise en oeuvre d'une synthèse directe où la masse de contact est formée de silicium et d'un système catalytique comportant un catalyseur au cuivre et un groupe d'additifs promoteurs à base de zinc et d'étain,
- si d'une part le catalyseur au cuivre est engagé sous la forme de cuivre métallique et/ou d'un halogénure de cuivre, et d'autre part la masse de contact renferme en outre un additif promoteur complémentaire judicieusement choisi parmi les dérivés des acides du phosphore,
- on observe alors : d'une part une amélioration sensible de la sélectivité en dialkyldihalogénosilane, et par exemple en DMDCS, évaluée par le rapport moyen MTCS/DMDCS, et d'autre part un abaissement sensible de la teneur pondérale en produits "lourds" par rapport aux silanes obtenus, tout en maintenant une activité moyenne très satisfaisante de la masse de contact, ladite activité étant évaluée en poids des silanes obtenus par heure et par kilogramme de silicium engagé.

D'autres avantages liés à la mise en oeuvre de la présente invention apparaîtront dans la suite du présent mémoire.

La présente invention propose en conséquence un procédé de préparation d'alkylhalogénosilanes par réaction d'un halogénure d'alkyle, de préférence CH₃Cl, avec une masse solide, dite masse de contact, formée de silicium et d'un système catalytique comportant (α) un catalyseur au cuivre, et (β) un groupe d'additifs promoteurs comprenant :
- un additif β1 choisi parmi le zinc métallique, un composé à base de zinc et un mélange de ces espèces,
- un additif β2 choisi parmi l'étain, un composé à base d'étain et un mélange de ces espèces,
- éventuellement un additif β3 choisi parmi le césium, le potassium, le rubidium, un composé dérivé de ces métaux et un mélange de ces espèces, ledit procédé de synthèse directe étant caractérisé par les points suivants pris en combinaison :
   - le catalyseur au cuivre (α) est sous la forme de cuivre métallique, d'un halogénure de cuivre ou d'un mélange de ces espèces,
   - la masse de contact renferme en outre un additif promoteur complémentaire β4 choisi parmi un dérivé d'un acide du phosphore et un mélange de ces espèces.

A noter que par l'expression "un dérivé d'un acide du phosphore", on entend désigner un composé du phosphore qui est absolument différent d'un phosphure métallique (et ne doit pas être confondu avec un phosphure métallique) qui est connu pour englobèr les combinaisons et alliages de phosphore avec au moins un autre élément métallique pris à l'état simple.

A la place du cuivre métallique, on peut utiliser à titre d'halogénure de cuivre : un halogénure cuivreux, comme par exemple le chlorure cuivreux ; un halogénure cuivrique, comme par exemple le chlorure cuivrique ; et un mélange de ces espèces. On utilise de préférence le cuivre métallique et/ou le chlorure cuivreux.

On peut utiliser à titre d'additif complémentaire β4 : un sel alcalin, un sel alcalino-terreux ou un sel métallique d'un acide hypophosphoreux ; un sel alcalin, un sel alcalino-terreux ou un sel métallique d'un acide phosphoreux (ortho, pyro, méta) ; un sel alcalin, un sel alcalino-terreux ou un sel métallique d'un acide hypophosphorique ; un sel alcalin, un sel alcalino-terreux ou un sel métallique d'un acide phosphorique (ortho, pyro, méta) ; un sel alcalin d'un acide polyphosphorique de formule Mₙ₊₂(PₙO₃ₙ₊₁) où M représente un métal alcalin et n est un nombre allant de 1 à 10 ; et un mélange de ces sels.

On utilise de préférence : un sel alcalin, un sel alcalino-terreux et/ou un sel de cuivre d'un acide hypophosphoreux, comme par exemple l'hypophosphite de sodium NaH₂PO₂, l'hypophosphite de potassium KH₂PO₂, l'hypophosphite de calcium Ca(H₂PO₂)₂, l'hypophosphite de magnésium Mg(H₂PO₂)₂, l'hypophosphite d'aluminium Al(H₂PO₂)₃ et/ou l'hypophosphite de cuivre-II Cu(H₂PO₂)₂ ; un sel alcalin, un sel alcalino-terreux et/ou un sel de cuivre d'un acide phosphorique (ortho, pyro, méta), comme par exemple le phosphate trisodique Na₃PO₄, le phosphate tripotassique K₃PO₄, le phosphate monocalcique Ca(H₂PO₄)₂, le phosphate bicalcique CaHPO₄, le phosphate tricalcique Ca₃(PO₄)₂, l'hydroxyorthophosphate de calcium Ca₃(PO₄)₃OH et/ou le phosphate de cuivre-II Cu(H₂PO₄)₂ ; un sel alcalin d'un acide polyphosphorique ayant la formule précitée où n= 3, comme par exemple le polyphosphate de sodium Na₅P₃O₁₀.

La quantité d'additif β4 (calculée en poids de phosphore élémentaire par rapport à la masse de silicium engagé) se situe dans l'intervalle allant de 50 à 3000 ppm et, de préférence, allant de 80 à 1500 ppm et, mieux encore, allant de 90 à 1200 ppm ; au dessous de 50 ppm l'action du phosphore n'est pas vraiment décelable et au-dessus de 3000 ppm, le phosphore a un effet poison qui abaisse la productivité.

Selon une première variante de mise en oeuvre de l'invention, l'additif promoteur complémentaire β4 est ajouté dans la masse de contact (à coté du silicium, du catalyseur au cuivre et des additifs promoteurs β1, β2 et éventuellement β3) dans l'état où il se trouve naturellement. Dans le cas de cette première variante, on utilise plus préférentiellement l'hypophosphite de sodium NaH₂PO₂, l'hypophosphite de potassium KH₂PO₂, l'hypophosphite de calcium Ca(H₂PO₂)₂, l'hypophosphite de magnésium Mg(H₂PO₂)₂, l'hypophosphite d'aluminium Al(H₂PO₂)₃ et/ou l'hypophosphite de cuivre-II Cu(H₂PO₂)₂. Convient tout spécialement bien l'hypophosphite de calcium Ca(H₂PO₂)₂.

Dans le cas de la première variante, convient tout spécialement bien l'emploi de 80 à 1500 ppm dudit hypophosphite de calcium Ca(H₂PO₂)₂.

Selon une seconde variante de mise en oeuvre de l'invention, l'additif promoteur complémentaire β4 est ajouté dans la masse de contact (à coté du silicium et des additifs promoteurs β1, β2 et éventuellement β3) sous la forme d'un adduct comportant l'halogénure de cuivre constituant le catalyseur (α) et au moins un dérivé d'un acide du phosphore.

L'adduct utilisé dans le procédé conforme à l'invention est une matière sous forme particulaire qui est généralement mise en oeuvre à l'état préformé. Pour la préparation (réalisée au préalable) de l'adduct, on peut faire appel à n'importe quel procédé commode pour mélanger mécaniquement et rendre ensuite homogène le mélange ainsi obtenu, l'halogénure de cuivre avec l'additif à base d'au moins un dérivé d'un acide du phosphore. On peut par exemple broyer l' halogénure de cuivre et l'additif, l'un et l'autre sous forme de particules comme par exemple une poudre, en opérant dans n'importe quel appareil de mélange conçu à cet effet.

Dans cette seconde variante, on utilise plus préférentiellement le phosphate trisodique Na₃PO₄, le phosphate tripotassique K₃PO₄, le phosphate monocalcique Ca(PO₄H₂)₂, le phosphate bicalcique CaHPO₄, le phosphate tricalcique Ca₃(PO₄)₂, l'hydroxyorthophosphate de calcium Ca₃(PO₄)₃OH, le phosphate de cuivre-II Cu(H₂PO₄)₂, et/ou le polyphosphate de sodium Na₅P₃O₁₀. Conviennent tout spécialement bien, le phosphate tricalcique Ca₃(PO₄)₂, et/ou l'hydroxyorthophosphate de calcium Ca₃(PO₄)₃OH.

On a également trouvé que le fait d'utiliser le catalyseur au cuivre sous cette forme d'adduct a pour conséquence celle de procurer audit catalyseur une coulabilité (ce qui en facilite bien entendu la mise en oeuvre) qui peut être améliorée par rapport à celles possédées par l'halogénure de cuivre utilisé seul (c'est à dire non sous forme d'adduct).

La quantité d'additif β4 dans l'adduct n'est pas d'une importance capitale et elle peut varier entre de larges limites. Suivant l'invention, on préfère utiliser un adduct sous forme particulaire dans lequel se trouve de 0,5 à 10% et, mieux, de 1 à 5% de son poids d'additif consistant dans au moins un dérivé d'un acide du phosphore.

Dans le cadre de la seconde variante, convient tout spécialement bien l'emploi d'un adduct sous forme particulaire dans lequel l'halogénure de cuivre est le chlorure cuivreux et où il se trouve de 1 à 5% de son poids de phosphate tricalcique Ca₃(PO₄)₂ et/ou d'hydroxyorthophosphate de calcium Ca₃(PO₄)₃OH.

Le catalyseur (α) est utilisé généralement, dans le cas de la première variante comme dans celui de la seconde, à une teneur pondérale allant de 1 à 20%, de préférence allant de 2 à 12%, par rapport à la masse de silicium engagé. Dans le cas de la seconde variante, la quantité de catalyseur (α) est choisie - à l'intérieur des zones de variation générale et préférée précitées et en fonction de la composition de l'adduct - de manière à apporter dans la masse de contact une teneur en dérivé(s) d'un acide du phosphore (calculée en ppm de phosphore élémentaire par rapport à la masse de silicium engagé) qui se situe dans l'intervalle allant de 50 à 3000 ppm et, de préférence, allant de 80 à 1500 ppm et, mieux encore, allant de 90 à 1200 ppm.

Dans le cadre de cette seconde variante, convient donc tout spécialement bien l'emploi d'une quantité d'adduct à base de chlorure cuivreux et de 1 à 5% de son poids de phosphate tricalcique Ca₃(PO₄)₂ et/ou d'hydroxyorthophosphate de calcium Ca₃(PO₄)₃OH qui apporte 80 à 1500 ppm de phosphore élémentaire.

Selon le mode de réalisation défini supra, le système catalytique contient en outre un additif promoteur β1 à base de zinc métallique et/ou d'un composé du zinc ; on utilise de préférence le zinc métallique et/ou le chlorure de zinc.

L'additif promoteur β1 est présent à une teneur pondérale située dans l'intervalle allant de 0,01 à 2 %, de préférence allant de 0,02 à 0,5 %, (calculée en zinc métal par rapport au poids de silicium engagé). Jusqu'à 90 % en poids du zinc, de préférence jusqu'à 50 % en poids du zinc peut être remplacé par un autre métal qui catalyse la chloration du cuivre et/ou qui forme un eutectique ou une phase à bas point de fusion avec les sels de cuivre et/ou les sels alcalins. Comme métal pouvant convenir on peut citer le cadmium, l'aluminium, le manganèse et l'argent.

La teneur pondérale en étain et/ou en composé de l'étain (additif promoteur β2 dont la teneur est calculée en poids d'étain métal) se situe dans l'intervalle allant de 10 à 500 ppm et, de préférence, allant de 30 à 300 ppm par rapport à la masse de silicium engagée.

Il est nécessaire d'avoir au moins 10 ppm d'étain métal. En outre une teneur pondérale supérieure à 500 ppm aurait un effet néfaste sur la réaction et notamment sur la sélectivité. Comme composé à base d'étain, on utilise par exemple le chlorure d'étain. L'additif promoteur β2 qui est utilisé de préférence est l'étain métal ; avantageusement cet étain métallique peut être ajouté sous forme de bronze.

A propos de l'additif promoteur facultatif β3, dans le cas où on en utilise un, on précisera les points qui suivent :
■ la teneur pondérale en additif promoteur β3 de type métal (calculée en poids de métal alcalin par rapport à la masse de silicium engagée) se situe dans l'intervalle allant de 0,01 à 2 % en poids et, de préférence, allant de 0,05 à 1,0 % en poids ; au dessous de 0,01 % en poids l'action du métal alcalin n'est pas vraiment décelable et au-dessus de 2 % en poids, le métal alcalin n'a pas l'effet attendu sur la sélectivité;
■ comme composé de métal alcalin choisi parmi le Cs, le K et le Rb, on peut utiliser : les halogénures et par exemple le chlorure ; les carboxylates et par exemple le formiate ou l'acétate ; le chlorure de césium, le chlorure de potassium, le chlorure de rubidium et/ou un mélanges de ces composés sont les additifs promoteurs β3 de type métal qui sont utilisés de préférence.

Pour le reste, il est souhaitable que la dimension particulaire du silicium soit telle que le diamètre moyen d'au moins 50 % en poids des particules soit compris entre 10 et 500 µm et, de préférence, entre 60 et 200 µm. De même le catalyseur (α) et le groupe de promoteurs (β) se trouvent également sous forme de particules dont le diamètre moyen d'au moins 50 % en poids des particules est avantageusement compris entre 1 et 100 µm.

Le procédé de synthèse directe selon l'invention peut être mis en oeuvre de façon générale dans un des trois types d'appareillages suivants : un réacteur du type à lit agité comme celui décrit dans le brevet des Etats-Unis d'Amérique US-A-2 449 821, un réacteur du type à lit fluidisé comme celui décrit dans le brevet des Etats-Unis d'Amérique US-A-2 389 931 ou dans un four rotatif.

La réaction de synthèse directe a lieu à une température se situant dans l'intervalle allant de 260 à 400°C et, de préférence, allant de 280 à 380 °C. Elle peut être conduite, en tout ou partie, sous une pression absolue d'halogénure d'alkyle égale à la pression atmosphérique (1 bar) ou supérieure à la pression atmosphérique ; quand on se situe dans ce dernier cas, on travaille généralement sous une pression absolue allant de 1,1 à 8 bars et ,de préférence, allant de 1,5 à 5 bars.

Pour la conduite de la réaction de synthèse directe, on réalise avantageusement au préalable, comme cela est bien connu, une étape initiale d'activation de la masse de contact (formée par l'ensemble à base de silicium + catalyseur + promoteurs) ; un des moyens d'activation qui convient bien peut consister à porter ladite masse de contact à une certaine température qui peut être inférieure ou supérieure de quelques degrés à quelques dizaines de degrés à la température choisie pour la réaction de synthèse directe et située dans l'intervalle général ou préférentiel mentionné supra.

En utilisant le système catalytique (α) + (β) selon l'invention, on peut obtenir, lorsque la réaction est mise en oeuvre, en lit agité comme en lit fluidisé, à une température allant de 260°C à 400°C et, de préférence, allant de 280 à 380 °C, une sélectivité en dialkyldihalogénosilane élevées et une teneur pondérale en sous-produits lourds faible, tout en ayant une activité moyenne très satisfaisante.

S'agissant de la sélectivité, évaluée par exemple par le rapport pondéral moyen MTCS/DMDCS : la valeur obtenue est de l'ordre ou inférieur à 0,10, pouvant atteindre une valeur aussi faible que 0,050.

S'agissant du pourcentage de lourds formés par rapport aux silanes obtenus, il est généralement inférieur à 3 % en poids, et il peut être aussi faible que 2 % en poids.

S'agissant de l'activité moyenne du système catalytique, elle est par exemple de l'ordre ou supérieure à 120 g de silanes/h/kg Si, pouvant atteindre 200 g de silanes/h/kg Si et même plus.

D'autres avantages et caractéristiques de la présente invention apparaîtront à la lecture des exemples suivants donnés à titre illustratif mais nullement limitatif.

Dans les exemples suivants, sauf mention contraire, on utilise un réacteur pilote cylindrique de diamètre intérieur 60 mm et de hauteur 250 mm, muni à sa base d'un distributeur de gaz en verre fritté. Le silicium et le système catalytique sont chargés sous forme d'une poudre dont la taille moyenne d'au moins 50 % en poids des particules est comprise entre 60 et 200 µm.

La réaction s'effectue en lit agité et le réacteur est muni d'un élément chauffant extérieur.

### ESSAI COMPARATIF A :

### Système catalytique : CuCl / ZnCl₂ / Sn

Dans un réacteur vertical, cylindrique, en verre, muni d'un agitateur métallique et d'un distributeur de gaz en verre fritté, on charge une poudre constituée de : 210 g de silicium, 11,5 g de CuCl, 1,44 g de ZnCl₂ et 0,38 g de bronze contenant 10 % en poids d'étain.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,129 (% pondéral/ % pondéral), et
- une proportion de "lourds" (polysilanes) s'élevant à 5,2 % en poids.

### EXEMPLE 1

### Système catalytique : CuCl / ZnCl₂ / Sn / Ca (H₂PO₂)₂

Dans un réacteur vertical, cylindrique, en verre, muni d'un agitateur métallique et d'un distributeur de gaz en verre fritté, on charge une poudre constituée de : 210 g de silicium, 11,5 g de CuCl, 1,44 g de ZnCl₂, 0,38 g de bronze contenant 10 % en poids d'étain et 0,576 g de Ca (H₂PO₂)₂ (1000 ppm de P par rapport au Si engagé).

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,069 (% pondéral/ % pondéral), et
- une proportion de "lourds" (polysilanes) s'élevant à 1,5 % en poids.

### ESSAI COMPARATIF B :

### Système catalytique : CuCl / ZnCl₂ / Sn / Cu₃P

Dans un réacteur vertical, cylindrique, en verre, muni d'un agitateur métallique et d'un distributeur de gaz en verre fritté, on charge une poudre constituée de : 210 g de silicium, 11,5 g de CuCl, 1,44 g de ZnCl₂, 0,38 g de bronze contenant 10 % en poids d'étain et 2,92 g de phosphure de cuivre Cu₃P contenant 7,2 % de phosphore (1000 ppm de P par rapport au Si engagé).

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,123 (% pondéral/ % pondéral), et
- une proportion de "lourds" (polysilanes) s'élevant à 3,6 % en poids.

### ESSAI COMPARATIF C :

### Système catalytique : CuCl / ZnCl₂ / Sn

Dans un réacteur vertical, cylindrique, en verre, muni d'un agitateur métallique et d'un distributeur de gaz en verre fritté, on charge une poudre constituée de : 210 g de silicium, 16,4 g de CuCl, 1,64 g de ZnCl₂ et 0,38 g de bronze contenant 10 % en poids d'étain.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,112 (% pondéral/ % pondéral), et
- une proportion de "lourds" (polysilanes) s'élevant à 4,0 % en poids.

### EXEMPLE 2

### Système catalytique : CuCl,Ca₃(PO₄)₂ / ZnCl₂ / Sn

Dans un réacteur vertical, cylindrique, en verre, muni d'un agitateur métallique et d'un distributeur de gaz en verre fritté, on charge une poudre constituée de : 210 g de silicium, 16,4 g d'adduct CuCl,Ca₃(PO₄)₂ contenant 2 % en poids de Ca₃(PO₄)₂, 1,64 g de ZnCl₂ et 0,38 g de bronze contenant 10 % en poids d'étain.

L'adduct est préparé par mélange mécanique, en opérant dans un mélangeur TURBULA (d'origine PROLABO), de la poudre de CuCl (d'origine PROLABO) avec de la poudre de Ca₃(PO₄)₂ (d'origine PROLABO).

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h.

L'essai se déroule à pression atmosphérique. L'essai est arrêté par l'opérateur après 8 heures de production de méthylchlorosilanes (MCS).

Le mélange produit est analysé par chromatographie en phase vapeur, et il est caractérisé par :
- un ratio MTCS/DMDCS égal à 0,089 (% pondéral/ % pondéral), et
- une proportion de "lourds" (polysilanes) s'élèvant à 2,8 % en poids.

### ESSAI COMPARATIF D :

### Système catalytique : Cu° / ZnCl₂ / Sn

Dans un réacteur vertical, cylindrique, en verre, muni d'un agitateur métallique et d'un distributeur de gaz en verre fritté, on charge une poudre constituée de : 210 g de silicium, 21,0 g de cuivre métallique, 1,64 g de ZnCl₂ et 0,38 g de bronze contenant 10 % en poids d'étain.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,168 (% pondéral/ % pondéral), et
- une proportion de "lourds" (polysilanes) s'élevant à 8 % en poids.

### EXEMPLE 3

### Système catalytique : Cu° / ZnCl₂ / Sn / Ca (H₂PO₂)₂

Dans un réacteur vertical, cylindrique, en verre, muni d'un agitateur métallique et d'un distributeur de gaz en verre fritté, on charge une poudre constituée de : 210 g de silicium, 21,0 g de cuivre métallique, 1,64 g de ZnCl₂, 0,38 g de bronze contenant 10 % en poids d'étain et 0,576 g de Ca (H₂PO₂)₂ (1000 ppm de P par rapport au Si engagé).

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,091 (% pondéral/ % pondéral), et
- une proportion de "lourds" (polysilanes) s'élevant à 1,7 % en poids.

### ESSAI COMPARATIF E :

### Système catalytique : Cu° / ZnCl₂ / Sn / Cu₃P

Dans un réacteur vertical, cylindrique, en verre, muni d'un agitateur métallique et d'un distributeur de gaz en verre fritté, on charge une poudre constituée de : 210 g de silicium, 21,0 g de cuivre métallique, 1,64 g de ZnCl₂, 0,38 g de bronze contenant 10 % en poids d'étain et 2,95 g de phosphure de cuivre Cu₃P contenant 7,2 % de phosphore (1000 ppm de P par rapport au Si engagé).

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 315°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par :
- un ratio MTCS/DMDCS égal à 0,116 (% pondéral/ % pondéral), et
- une proportion de "lourds" (polysilanes) s'élevant à 4,3 % en poids.

## Revendications

1. Procédé de préparation d'alkylhalogénosilanes par réaction d'un halogénure d'alkyle, de préférence CH₃Cl, avec une masse solide, dite masse de contact, formée de silicium et d'un système catalytique comportant (α) un catalyseur au cuivre, et (β) un groupe d'additifs promoteurs comprenant :
- un additif β1 choisi parmi le zinc métallique, un composé à base de zinc et un mélange de ces espèces,
- un additif β2 choisi parmi l'étain, un composé à base d'étain et un mélange de ces espèces,
- éventuellement un additif β3 choisi parmi le césium, le potassium, le rubidium, un composé dérivé de ces métaux et un mélange de ces espèces,
ledit procédé de synthèse directe étant **caractérisé par** les points suivants pris en combinaison :
• le catalyseur au cuivre (α) est sous la forme de cuivre métallique, d'un halogénure de cuivre ou d'un mélange de ces espèces,
• la masse de contact renferme en outre un additif promoteur complémentaire β4 choisi parmi un dérivé d'un acide du phosphore et un mélange de ces espèces.

2. Procédé selon la revendication 1, **caractérisé** le catalyseur (α) est utilisé à une teneur pondérale allant de 1 à 20% par rapport à la masse de silicium engagé.

3. Procédé selon la revendication 1 ou 2, **caractérisé en ce que** l'additif promoteur complémentaire β4 est choisi parmi : un sel alcalin, un sel alcalino-terreux ou un sel métallique d'un acide hypophosphoreux ; un sel alcalin, un sel alcalino-terreux ou un sel métallique d'un acide phosphoreux (ortho, pyro, méta) ; un sel alcalin, un sel alcalino-terreux ou un sel métallique d'un acide hypophosphorique ; un sel alcalin, un sel alcalino-terreux ou un sel métallique d'un acide phosphorique (ortho, pyro, méta) ; un sel alcalin d'un acide polyphosphorique de formule Mₙ₊₂(PₙO₃ₙ₊₁) où M représente un métal alcalin et n est un nombre allant de 1 à 10 ; et un mélange de ces sels.

4. Procédé selon l'une quelconque des revendications 1 à 3, **caractérisé en ce que** la teneur en additif β4 est située dans l'intervalle allant de 50 à 3000 ppm.

5. Procédé selon l'une quelconque des revendications 1 à 4, **caractérisé en ce que**, selon une première variante de mise en oeuvre de l'invention, l'additif promoteur complémentaire β4 est ajouté dans la masse de contact - à coté du silicium, du catalyseur au cuivre et des additifs promoteurs β1, β2 et éventuellement β3 - dans l'état où il se trouve naturellement.

6. Procédé selon la revendication 5, **caractérisé en ce que** l'on utilise l'hypophosphite de sodium NaH₂PO₂, l'hypophosphite de potassium KH₂PO₂, l'hypophosphite de calcium Ca(H₂PO₂)₂, l'hypophosphite de magnésium Mg(H₂PO₂)₂, l'hypophosphite de cuivre-II Cu(H₂PO₂)₂ et/ou l'hypophosphite d'aluminium Al(H₂PO₂)₃.

7. Procédé selon la revendication 5 ou 6, **caractérisé en ce que** l'on utilise l'hypophosphite Ca(H₂PO₂)₂.

8. Procédé selon l'une quelconque des revendications 1 à 4, **caractérisé en ce que**, selon une seconde variante de mise en oeuvre de l'invention, l'additif promoteur complémentaire β4 est ajouté dans la masse de contact - à coté du silicium et des additifs promoteurs β1, β2 et éventuellement β3 - sous la forme d'un adduct comportant l'halogénure de cuivre constituant le catalyseur (α) et au moins un dérivé d'un acide du phosphore.

9. Procédé selon la revendication 8, **caractérisé en ce que** l'on utilise le phosphate trisodique Na₃PO₄, le phosphate tripotassique K₃PO₄, le phosphate monocalcique Ca(PO₄H₂)₂, le phosphate bicalcique CaHPO₄, le phosphate tricalcique Ca₃(PO₄)₂, l'hydroxyorthophosphate de calcium Ca₃(PO₄)₃OH, le phosphate de cuivre-II Cu(H₂PO₄)₂ et/ou le polyphosphate de sodium Na₅P₃O₁₀.

10. Procédé selon la revendication 8 ou 9, **caractérisé en ce que** l'on utilise le phosphate tricalcique Ca₃(PO₄)₂ et/ou l'hydroxyorthophosphate de calcium Ca₃(PO₄)₃OH.

11. Procédé selon l'une quelconque des revendications 8 à 10, **caractérisé en ce que** la quantité de catalyseur (α) est choisie - à l'intérieur de la zone de variation générale selon la revendication 2 et en fonction de la composition de l'adduct - de manière à apporter dans la masse de contact une teneur en dérivé(s) d'un acide du phosphore, calculée en ppm de phosphore élémentaire par rapport à la masse de silicium engagé, qui se situe dans l'intervalle allant de 50 à 3000 ppm

12. Procédé selon l'une quelconque des revendications 1 à 11, **caractérisé en ce que** la teneur en additif β1 est située dans l'intervalle allant de 0,01 à 2,0 %.

13. Procédé selon l'une quelconque des revendications 1 à 12, **caractérisé en ce que** l'additif β1 est le zinc métallique et/ou le chlorure de zinc.

14. Procédé selon l'une quelconque des revendications 1 à 13, **caractérisé en ce que** la teneur en additif β2 est située dans l'intervalle allant de 10 à 500 ppm.

15. Procédé selon l'une quelconque des revendications 1 à 14, **caractérisé en ce que** l'additif β2 est l'étain métal.

16. Procédé selon la revendication 15, **caractérisé en ce que** l'étain métallique est engagé sous forme de bronze.

17. Procédé selon l'une quelconque des revendications 1 à 16, **caractérisé en ce que** la teneur en additif β3, quand on en utilise un, est située dans l'intervalle allant de : 0,01 à 2,0%.

18. Procédé selon la revendication 17, **caractérisé en ce que** l'additif β3 est le chlorure de césium, le chlorure de potassium, le chlorure de rubidium et/ou un mélange de ces composés.

19. Procédé selon l'une quelconque des revendications 1 à 18, **caractérisé en ce que** la réaction de synthèse directe est conduite à une température se situant dans l'intervalle allant de 260°C à 400°C, sous une pression égale ou supérieure à la pression atmosphérique.

## Claims

1. Process for the preparation of alkylhalosilanes by reaction of an alkyl halide, preferably CH₃Cl, with a solid body, referred to as contact body, formed of silicon and of a catalytic system comprising (α) a copper catalyst and (β) a group of promoting additives comprising:
- an additive β1 chosen from metallic zinc, a zinc-based compound and a mixture of these entities,
- an additive β2 chosen from tin, a tin-based compound and a mixture of these entities,
- optionally an additive β3 chosen from caesium, potassium, rubidium, a compound derived from these metals and a mixture of these entities,
the said direct synthesis process being **characterized by** the following points, taken in combination:
• the copper catalyst (α) is in the form of metallic copper, of a copper halide or of a mixture of these entities,
• the contact body additionally includes a supplementary promoting additive β4 chosen from a derivative of an acid of phosphorus and a mixture of these entities.

2. Process according to Claim 1, **characterized in that** the catalyst (α) is used at a content by weight ranging from 1 to 20%, with respect to the weight of silicon introduced.

3. Process according to Claim 1 or 2, **characterized in that** the supplementary promoting additive β4 is chosen from: an alkali metal salt, an alkaline earth metal salt or a metal salt of a hypophosphorous acid; an alkali metal salt, an alkaline earth metal salt or a metal salt of a phosphorous acid (ortho, pyro, meta); an alkali metal salt, an alkaline earth metal salt or a metal salt of a hypophosphoric acid; an alkali metal salt, an alkaline earth metal salt or a metal salt of a phosphoric acid (ortho, pyro, meta); an alkali metal salt of a polyphosphoric acid of formula Mₙ₊₂(PₙO₃ₙ₊₁) where M represents an alkali metal and n is a number ranging from 1 to 10; and a mixture of these salts.

4. Process according to any one of Claims 1 to 3, **characterized in that** the content of additive β4 lies within the range extending from 50 to 3000 ppm.

5. Process according to any one of Claims 1 to 4, **characterized in that**, according to a first alternative embodiment of the invention, the supplementary promoting additive β4 is added to the contact body (beside the silicon, copper catalyst and promoting additives β1, β2 and optionally β3) in the state in which it naturally occurs.

6. Process according to Claim 5, **characterized in that** use is made of sodium hypophosphite NaH₂PO₂, potassium hypophosphite KH₂PO₂, calcium hypophosphite Ca(H₂PO₂)₂, magnesium hypophosphite Mg(H₂PO₂)₂, copper(II) hypophosphite Cu(H₂PO₂)₂ and/or aluminum hypophosphite Al(H₂PO₂)₃.

7. Process according to Claim 5 or 6, **characterized in that** calcium hypophosphite Ca(H₂PO₂)₂ is used.

8. Process according to any one of Claims 1 to 4, **characterized in that**, according to a second alternative embodiment of the invention, the supplementary promoting additive β4 is added to the contact body (beside the silicon and promoting additives β1, β2 and optionally β3) in the form of an adduct comprising the copper halide constituting the catalyst (α) and at least one derivative of an acid of phosphorus.

9. Process according to Claim 8, **characterized in that** use is made of trisodium phosphate Na₃PO₄, tripotassium phosphate K₃PO₄, monocalcium phosphate Ca(H₂PO₄)₂, dicalcium phosphate CaHPO₄, tricalcium phosphate Ca₃(PO₄)₂, basic calcium orthophosphate Ca₅(PO₄)₃OH, copper(II) phosphate Cu(H₂PO₄)₂ and/or sodium polyphosphate Na₅P₃O₁₀.

10. Process according to Claim 8 or 9, **characterized in that** use is made of tricalcium phosphate Ca₃(PO₄)₂ and/or basic orthophosphate Ca₅(PO₄)₃OH.

11. Process according to any one of Claims 8 to 10, **characterized in that** the amount of catalyst (α) is chosen, within the general region of variation as claimed in claim 2 and according to the composition of the adduct, so as to contribute, to the contact body, a content of derivative(s) of an acid of phosphorus, calculated as ppm of elemental phosphorus with respect to the weight of silicon introduced, which lies within the range extending from 50 to 3000 ppm.

12. Process according to any one of Claims 1 to 11, **characterized in that** the content of additive β1 lies within the range extending from 0.01 to 2.0%.

13. Process according to any one of Claims 1 to 12, **characterized in that** the additive β1 is metallic zinc and/or zinc chloride.

14. Process according to any one of Claims 1 to 13, **characterized in that** the content of additive β2 lies within the range extending from 10 to 500 ppm.

15. Process according to any one of Claims 1 to 14, **characterized in that** the additive β2 is tin metal.

16. Process according to Claim 15, **characterized in that** the metallic tin is introduced in the form of bronze.

17. Process according to any one of Claims 1 to 16, **characterized in that** the content of additive β3, when one of them is used, lies within the range extending from 0.01 to 2.0%.

18. Process according to Claim 17, **characterized in that** the additive β3 is caesium chloride, potassium chloride, rubidium chloride and/or a mixture of these compounds.

19. Process according to any one of Claims 1 to 18, **characterized in that** the direct synthesis reaction is carried out at a temperature lying within the range extending from 260°C to 400°C, under a pressure equal to or greater than atmospheric pressure.

## Patentansprüche

1. Verfahren zur Herstellung von Alkylhalogen-Silanen durch Reaktion eines Alkylhalogenids, vorzugsweise CH₃Cl, mit einer festen Masse, genannt Kontaktmasse, die aus Silizium und einem katalytischen System gebildet ist, das (α) einen Kupferkatalysator und (β) eine Promotoradditivgruppe enthält, umfassend:
- ein Additiv β1, ausgewählt aus metallischem Zink, einer Verbindung auf Zinkbasis und einer Mischung aus denselben,
- ein Additiv β2, ausgewählt aus Zinn, einer Verbindung auf Zinnbasis und einer Mischung aus denselben,
- gegebenenfalls ein Additiv β3, ausgewählt aus Caesium, Kalium, Rubidium, einer Verbindung, abgeleitet aus diesen Metallen und einer Mischung derselben, wobei das Verfahren zur direkten Synthese durch die folgenden in Kombination genommenen Punkte **gekennzeichnet** ist:
• der Kupferkatalysator (α) in Form eines metallischen Kupfers, eines Kupferhalogenids oder einer Mischung derselben vorliegt,
• die Kontaktmasse außerdem ein komplementäres Promotoradditiv β4 einschließt, ausgewählt aus einem Phosphorsäurederivat und einer Mischung derselben.

2. Verfahren nach Anspruch 1, **dadurch gekennzeichnet, dass** der Katalysator (α) mit einem Gewichtsanteil von 1 bis 20% in Bezug auf die festgelegte Siliziummasse verwendet wird.

3. Verfahren nach Anspruch 1 oder Anspruch 2, **dadurch gekennzeichnet, dass** das komplementäre Promotoradditiv β4 ausgewählt ist aus: einem Alkalisalz, einem Erdalkalisalz oder einem Metallsalz einer hypophosphorigen Säure; einem Alkalisalz, einem Erdalkalisalz oder einem Metallsalz einer phosphorigen Säure (Ortho, Pyro, Meta); einem Alkalisalz, einem Erdalkalisalz oder einem Metallsalz einer Hypophosphorsäure; einem Alkalisalz einer Phosphorsäure (Ortho, Pyro, Meta); einem Alkalisalz einer Polyphosphorsäure der Formel Mₙ₊₂(PₙO₃ₙ₊₁), worin M ein Alkalisalz darstellt und n eine Zahl zwischen 1 und 10 ist; und einer Mischung dieser Salze.

4. Verfahren nach einem beliebigen der Ansprüche 1 bis 3, **dadurch gekennzeichnet, dass** der Gehalt an Additiv β4 in einem Bereich zwischen 50 und 3000 ppm liegt.

5. Verfahren nach einem beliebigen der Ansprüche 1 bis 4, **dadurch gekennzeichnet, dass** nach einer ersten Variante der Umsetzung der Erfindung, das komplementäre Promotoradditiv β4 in der Kontaktmasse hinzugefügt ist, - neben dem Silizium, dem Kupferkatalysator und den Promotoradditiven β1, β2 und gegebenenfalls β3 - in dem Zustand, in dem es sich naturgemäß befindet.

6. Verfahren nach Anspruch 5, **dadurch gekennzeichnet, dass** man Natrium-Hypophosphit NaH₂PO₂, Kalium-Hypophosphit KH₂PO₂, Kalzium-Hypophosphit Ca(H₂PO₂)₂, Magnesium-Hypophosphit Mg (H₂PO₂)₂, KupferII-Hypophosphit Cu(H₂PO₂)₂ und/oder Aluminium-Hypophosphit Al(H₂PO₂)₃ verwendet.

7. Verfahren nach Anspruch 5 oder Anspruch 6, **dadurch gekennzeichnet, dass** man Kalzium-Hypophosphit Ca(H₂PO₂)₂ verwendet.

8. Verfahren nach einem der Ansprüche 1 bis 4, **dadurch gekennzeichnet, dass** nach einer zweiten Variante der Umsetzung der Erfindung das komplementäre Promoteradditiv β4 in die Kontaktmasse - neben dem Silizium und den Promotoradditiven β1, β2 und gegebenenfalls β3 - in Form eines Adduktes, das den Katalysator (α) bildendes Kupferhalogenid und mindestens ein Derivat einer Phosphorsäure einschließt.

9. Verfahren Anspruch 8, **dadurch gekennzeichnet, dass** man Natriumtriphosphat Na₃PO₄, Kaliumtriphosphat K₃PO₄, Kalziummonophosphat Ca(PO₄H₂)₂, Kalziumdiphosphat CaHPO₄, Kalziumtriphosphat Ca₃(PO₄)₂, Kalziumhydroxyorthophosphat Ca₃(PO₄)₃OH, Kupfer-II-Phosphat Cu(H₂PO₄)₂ 2 und/oder Natriumpolyphosphat Na₅P₃O₁₀ verwendet.

10. Verfahren nach Anspruch 8 oder Anspruch 9, **dadurch gekennzeichnet, dass** man das Kalziumtriphosphat (Ca₃(PO₄)₂ und/oder das Kalziumhydroxyorthophosphat Ca₃(PO₄)3OH verwendet.

11. Verfahren nach einem beliebigen der Ansprüche 8 bis 10, **dadurch gekennzeichnet, dass** die Katalysatormenge (α) - innerhalb des allgemeinen Variationsbereichs nach Anspruch 2 und abhängig von der Zusammensetzung des Addukts - derart gewählt wird, dass in die Kontaktmasse ein Gehalt an Derivat(en) einer Phosphorsäure eingebracht wird, der in ppm elementarer Phosphor bezogen auf die die festgelegte Siliziummasse, die in dem Bereich von 50 bis 3000 ppm liegt, gerechnet wird.

12. Verfahren nach einem beliebigen der Ansprüche 1 bis 11, **dadurch gekennzeichnet, dass** der Gehalt an Additiv β1 in einem Bereich von 0,01 bis 2% liegt.

13. Verfahren nach einem beliebigen der Ansprüche 1 bis 12, **dadurch gekennzeichnet, dass** das Additiv β1 metallisches Zink und/oder Zinkchlorid ist.

14. Verfahren nach einem beliebigen der Ansprüche 1 bis 13, **dadurch gekennzeichnet, dass** der Gehalt an Additiv β2 im Bereich zwischen 10 bis 500 ppm liegt.

15. verfahren nach einem beliebigen der Ansprüche 1 bis 14, **dadurch gekennzeichnet, dass** das Additiv β2 Zinnmetall ist.

16. Verfahren nach Anspruch 15, **dadurch gekennzeichnet, dass** das metallische Zinn in Form von Bronze eingebracht wird.

17. Verfahren nach einem beliebigen der Ansprüche 1 bis 16, **dadurch gekennzeichnet, dass** der Gehalt an Additiv β3, wenn man eines verwendet, in einem Bereich zwischen 0,01 bis 2,0% liegt.

18. Verfahren nach Anspruch 17, **dadurch gekennzeichnet, dass** das Additiv β3 Caesiumchlorid, Kaliumchlorid, Rubidiumchlorid und/oder eine Mischung dieser Verbindungen ist.

19. Verfahren nach einem beliebigen der Ansprüche 1 bis 18, **dadurch gekennzeichnet, dass** die Reaktion der direkten Synthese bei einer Temperatur in einem Bereich zwischen 260°C bis 400°C, unter einem Druck gleich oder größer dem atmosphärischen Druck durchgeführt wird.
